(19) **Europäisches Patentamt / European Patent Office / Office européen des brevets**

(11) **EP 4 566 987 A1**

(12) **EUROPÄISCHE PATENTANMELDUNG**

(43) Veröffentlichungstag:
**11.06.2025  Patentblatt 2025/24**

(21) Anmeldenummer: 23020541.1

(22) Anmeldetag: **07.12.2023**

(51) Internationale Patentklassifikation (IPC):
**C01B 3/04** (2006.01)

(52) Gemeinsame Patentklassifikation (CPC):
**C01B 3/047;** C01B 2203/0277; C01B 2203/0827;
C01B 2203/0883; C01B 2203/1058;
C01B 2203/1064; C01B 2203/143

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Linde GmbH**
**82049 Pullach (DE)**

(72) Erfinder:
• **Behrens, Axel**
  **82049 Pullach (DE)**
• **Reinke, Michael**
  **82049 Pullach (DE)**
• **Bohn, Jan-Peter**
  **82049 Pullach (DE)**

(74) Vertreter: **Fischer, Werner**
**Linde GmbH**
**Intellectual Property EMEA**
**Dr.-Carl-von-Linde-Straße 6-14**
**82049 Pullach (DE)**

(54) **VERFAHREN UND ANLAGE ZUR SPALTUNG VON AMMONIAK UNTER VERWENDUNG VON AMMONIAK**

(57) Die Erfindung betrifft ein Verfahren sowie eine Anlage (100) zur thermischen Spaltung von Ammoniak, wobei zumindest ein Teil eines zur Verfügung gestellten Ammoniakeinsatzes (1, 2) in einem endotherm betriebenen ersten Spaltreaktor (20) mit katalytischer Unterstützung unter Erhalt eines Ammoniak sowie Wasserstoff und Stickstoff enthaltenden ersten Spaltgases (3) umgesetzt wird. Kennzeichnend hierbei ist, dass zumindest ein Teil des ersten Spaltgases (3) einem zweiten Spaltreaktor (30) zugeführt wird, um Ammoniak mit katalytischer Unterstützung thermisch zu spalten und ein Ammoniak sowie Wasserstoff und Stickstoff enthaltendes zweites Spaltgas (4) zu erhalten.

Fig. 1

EP 4 566 987 A1

**Beschreibung**

Die Erfindung betrifft ein Verfahren und eine Anlage zur thermischen Spaltung von Ammoniak, wobei zumindest ein Teil eines zur Verfügung gestellten Ammoniakeinsatzes in einem endotherm betriebenen ersten Spaltreaktor mit katalytischer Unterstützung unter Erhalt eines Ammoniak sowie Wasserstoff und Stickstoff enthaltenden ersten Spaltgases umgesetzt wird.

Die katalytisch unterstütze thermische Spaltung von Ammoniak ist bekannt und seit vielen Jahren Stand der Technik. Die dabei ablaufende Reaktion

$$2NH_{3(Gas)} \leftrightarrow N_2 + 3H_2$$

ist endotherm ($\Delta H=46,2kJ/mol$). Die Lage des Gleichgewichts und die Reaktionsgeschwindigkeit hängen stark von Druck und Temperatur sowie von der Art des eingesetzten Katalysators ab.

Gewöhnlich wird das heiß aus einem zur Ammoniakspaltung eingesetzten Spaltreaktor austretende, als Spaltgas bezeichnete Gasgemisch, das neben Wasserstoff und Stickstoff auch nicht umgesetztes Ammoniak enthält, gegen anzuwärmende Verfahrensströme abgekühlt, ehe es weiteren Behandlungsschritten unterzogen wird, um ein Produkt wie beispielsweise Reinwasserstoff (> 99,9Vol.-% Wasserstoff) oder Formiergas (Mischung aus Wasserstoff und Stickstoff) zu erhalten, das typischerweise mit einem Druck von mehr als 5bar abgegeben wird.

Um das erzeugte Produkt ohne oder mit nur geringem Verdichtungsaufwand abgeben zu können, wird die Ammoniakspaltung zweckmäßigerweise bei Drücken zwischen 20 und 40bar durchgeführt. Dies ist umso einfacher möglich, als das für die Spaltung bestimmte Ammoniak gewöhnlich flüssig zur Verfügung steht, weshalb sein Druck mit nur wenig Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen von bis zu 900°C zu betreiben. Durch die hohen Temperaturen des so erhaltenen Spaltgases ergeben sich allerdings Probleme bei der Wärmeintegration.

Um die Wärme eines ca. 900°C heißen Spaltgases zu nutzen, kann es in einem sog. Feed-Effluent-Wärmetauscher zur Überhitzung des dem Spaltreaktor zuzuführenden Ammoniakeinsatzes verwendet werden. Ein hierfür geeigneter Feed-Effluent-Wärmetauscher muss aber mit hochwarmfesten und gegen Nitrierung beständigen Rohren ausgeführt sein, die nur in geringer Auswahl und zu hohen Kosten auf dem Markt verfügbar sind.

Möglich ist es auch, den flüssig bereitgestellten Ammoniakeinsatz in einem Prozessgaskühler (engl.: process gas cooler, PGC), wie er ähnlich beispielsweise bei der Dampfreformierung von Methan zur Verdampfung von Wasser Verwendung findet, gegen das heiße Spaltgas zu verdampfen. Nachteilig hierbei ist allerdings, dass so ausgelegte Anlagen nur sehr langsam auf Laständerungen reagieren und der Ammoniakeinsatz im PGC nur verdampft, aber nicht überhitzt werden kann. Eine Überhitzung des Ammoniakeinsatzes ist allerdings notwendig, um zu vermeiden, dass in einem Durchflussregler, der vor dem nachgeschalteten Überhitzer angeordnet ist, eine flüssige Phase entsteht, die zu Problemen im Überhitzer führen würde.

Die vorliegende Erfindung stellt sich die Aufgabe, ein Verfahren sowie eine Anlage der gattungsgemäßen Art anzugeben, die eine gegenüber dem Stand der Technik verbesserte Wärmeintegration ermöglichen.

Die gestellte Aufgabe wird verfahrensseitig erfindungsgemäß dadurch gelöst, dass zumindest ein Teil des ersten Spaltgases einem zweiten Spaltreaktor zugeführt wird, um Ammoniak mit katalytischer Unterstützung thermisch zu spalten und ein Ammoniak sowie Wasserstoff und Stickstoff enthaltendes zweites Spaltgas zu erhalten.

Vorzugsweise wird der zweite, im Folgenden auch als Post-Cracker bezeichnete Spaltreaktor adiabat, d.h. ohne die Nutzung von außerhalb zugeführter oder intern erzeugter Wärme betrieben. Die für die Ammoniakspaltung benötigte Energie wird ausschließlich dem umzusetzenden Teil des ersten Spaltgases entzogen, wodurch das zweite Spaltgas eine niedrigere Temperatur als das erste Spaltgas aufweist.

Durch das erfindungsgemäße Verfahren verbessert sich der Umsetzungsgrad des eingesetzten Ammoniaks. Darüber hinaus ermöglicht es auch dann eine effektive Wärmeintegration, wenn das erste Spaltgas eine Temperatur von bis zu 900°C aufweist. Vorzugsweise wird das kältere zweite Spaltgas in einem kostengünstig aus Standardmaterialen gefertigten Feed-Effluent-Wärmetauscher zur Verdampfung und Überhitzung des Ammoniakeinsatzes verwendet.

Außerdem können die beiden Spaltreaktoren bei gleicher Wasserstoffproduktion für einen geringeren Massenfluss ausgelegt werden als ein einzelner befeuerter Spaltreaktor, wodurch die Investitionskosten sinken. Zudem verringert sich durch den zweiten Spaltreaktor der Ammoniakslip.

In einer Ausgestaltung des erfindungsgemäßen Verfahrens wird dem ersten Spaltgas vor seiner Einleitung in den Post-Cracker ein Ammoniak enthaltender Stoffstrom flüssig oder gasförmig zugemischt. Sinnvollerweise handelt es sich bei dem Ammoniak enthaltenden Stoffstrom um einen Teil des Ammoniakeinsatzes, der eine geringere Temperatur als das erste Spaltgas besitzt, so dass das erste Spaltgas durch die Zumischung gekühlt wird.

Dadurch kann ein weiterer Teil des Ammoniakeinsatzes mit Hilfe der Wärme des ersten Spaltgases umgesetzt und die Effizienz in Hinblick auf die Wärmeintegration weiter gesteigert werden. Der Aggregatszustand sowie die Temperatur des Ammoniak enthaltenden Stoffstroms hängen dabei von der Austrittstemperatur des ersten Spaltgases und der zur Durchführung der Reaktion im zweiten Spaltreaktor notwendigen Temperatur ab. Vorzugsweise wird das erste Spaltgas durch die Zumischung des Ammoniak enthaltenden Stoffstroms auf eine für den Katalysator des Post-Crackers abgestimmte Temperatur abgekühlt.

Die Ammoniakspaltung im ersten Spaltreaktor kann insbesondere zweistufig ausgeführt werden. Dazu weist der erste Spaltreaktor einen Vorspaltreaktor (Pre-Cracker) und einen stromabwärts angeordneten Hauptspaltreaktor auf, wobei der Pre-Cracker insbesondere adiabat betrieben wird. Durch die zweistufige Ausführung der Ammoniakspaltung kann die Last zwischen dem Pre-Cracker und dem Hauptspaltreaktor in einfacher Weise verteilt werden. Da im Pre-Cracker bereits ein Teil des Ammoniaks umgesetzt wird, reduziert sich der Ammoniak-Partialdruck im Hauptspaltreaktor. Das ermöglicht es, der Hauptspaltreaktor bei höheren Temperaturen und damit einer höheren Ammoniakumsetzung zu betreiben, ohne dass die Gefahr einer Nitrierung besteht. Weiterhin ist es möglich, durch geeignete Materialauswahl den Pre-Cracker und den Hauptspaltreaktor kostengünstiger auszuführen.

In einer Ausgestaltung wird die Ammoniakspaltung im ersten Spaltreaktor unter Einsatz eines auf Nickel basierenden Katalysators ausgeführt. Ein auf Nickel basierender Katalysator ist einerseits kostengünstig und hat andererseits bei den hohen im ersten Spaltreaktor herrschenden Temperaturen eine hohe Aktivität, so dass das eingesetzt Ammoniak effizient umgesetzt werden kann.

In einer anderen Ausgestaltung wird die Ammoniakspaltung im zweiten Spaltreaktor unter Einsatz eines auf Nickel, Eisen oder einem Edelmetall, wie Ruthenium, Platin oder Palladium basierenden Katalysators ausgeführt. Der zweite Spaltreaktor kann insbesondere auch mehrere Katalysatorbetten besitzen, wobei wenigstens ein Katalysatorbett einen Katalysator aufweisen, der Nickel enthält und wenigstens ein Katalysatorbett einen Katalysator aufweisen, der Edelmetall, wie Ruthenium, Platin oder Palladium, oder Eisen enthält. Insbesondere weist das eintrittsseitige Katalysatorbett einen Katalysator auf, der auf Nickel basiert, da am Eintritt des zweiten Spaltreaktors die Temperatur des aus dem ersten Spaltgas gebildeten Einsatzes bis zu 900°C betragen kann, und Katalysatoren auf Edelmetall- oder Eisenbasis für derartig hohe Temperaturen wenig geeignet sind. Da der zweite Spaltreaktor ohne Zufuhr von Wärme arbeitet, sinkt die Temperatur des Gases im Reaktorverlauf, wodurch das Gas weiter stromabwärts eine Temperatur erreicht, bei der Katalysatoren verwendet werden können, die auf einem Edelmetall oder Eisen basieren.

Wird das erste Spaltgas vor seiner Zufuhr zum zweiten Spaltreaktor mit einem Ammoniak enthaltenden Stoffstrom gemischt, ist es möglich, die Temperatur des dem zweiten Spaltreaktor zugeführten Einsatzes auf beispielsweise ca. 600°C zu senken, so dass die Ammoniakspaltung in zweiten Spaltreaktor ausschließlich mit Unterstützung von auf Edelmetall oder Eisen basierenden Katalysatoren durchgeführt werden kann. Da die Nitrierungsgefahr bei diesen Temperaturen gering ist, kann der zweite Spaltreaktor einfacher und mit geringeren Investitionskosten ausgeführt werden.

In einer Ausgestaltung wird das zweite Spaltgas einer Wärmeintegration unterzogen, bei der das zweite Spaltgas oder ein Teil davon unter Erhalt eines abgekühlten dritten Spaltgases mittels eines Feed-Effluent-Wärmetauschers auf zumindest einen Teil des Ammoniakeinsatzes übertragen wird, der dabei vor seiner Zufuhr zum ersten Spaltreaktor vorzugsweise verdampft und überhitzt wird. Weiterhin kann die Wärme des zweiten Spaltgases zur Vorwärmung eines zur Befeuerung des ersten Spaltreaktors eingesetzten Brennstoffs und/oder hierfür benötigter Verbrennungsluft verwendet wird.

In einer weiteren Ausgestaltung wird ein Teil eines Spaltgases zur Befeuerung des ersten Spaltreaktors eingesetzt. Sämtliche Spaltgase enthalten zwar einen gewissen Ammoniakanteil, bestehen aber hauptsächlich aus Wasserstoff und Stickstoff. Dadurch kann, im Gegensatz zur Verbrennung von reinem Ammoniak, eine höhere Flammengeschwindigkeit erreicht und die Bildung von Stickstoffoxiden verringert werden.

Ein "Teil eines Spaltgases" kann hier ein (lediglich) durch Aufteilen des Spaltgases gebildeter Teilstrom mit derselben Zusammensetzung wie das Spaltgas selbst sein. Er kann aber auch eine Fraktion mit unterschiedlicher Zusammensetzung sein, die beispielsweise in einer Druckwechseladsorption aus dem Spaltgas erhalten wird.

Die Erfindung betrifft weiterhin eine Anlage zur thermischen Spaltung von Ammoniak, mit einem endotherm betreibbaren ersten Spaltreaktor, mit dem zumindest ein Teil eines zur Verfügung gestellten Ammoniakeinsatzes mit katalytischer Unterstützung unter Erhalt eines Ammoniak sowie Wasserstoff und Stickstoff enthaltenden ersten Spaltgases umsetzbar ist.

Die gestellte Aufgabe wird anlagenseitig erfindungsgemäß dadurch gelöst, dass sie einen zweiten Spaltreaktor aufweist, dem zumindest ein Teil des ersten Spaltgases zugeführt werden kann, um Ammoniak mit katalytischer Unterstützung thermisch zu spalten und ein Ammoniak sowie Wasserstoff und Stickstoff enthaltendes zweites Spaltgases zu erhalten.

Vorzugsweise ist der zweite Spaltreaktor adiabat betreibbar.

In einer bevorzugten Ausgestaltung umfasst der erste Spaltreaktor einen adiabat betreibbaren Pre-Cracker sowie einen endotherm betreibbaren Hauptspaltreaktor.

Besonders bevorzugt weist die erfindungsgemäße Anlage eine zwischen dem ersten und dem zweiten Spaltreaktor angeordnete Zuführeinrichtung auf, über die dem ersten Spaltgas ein Ammoniak enthaltender Stoffstrom flüssig oder gasförmig geregelt zugemischt werden kann.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Kurze Beschreibung der Zeichnung

Ausgestaltungen der Erfindung werden nachfolgend rein beispielhaft unter Bezugnahme auf die beigefügte Zeichnung unter Erläuterung des technischen Hintergrunds beschrieben.

Figur 1 zeigt ein Verfahren bzw. eine Anlage gemäß einer Ausgestaltung der vorliegenden Erfindung,

Figur 2 zeigt ein Verfahren bzw. eine Anlage gemäß einer weiteren Ausgestaltung der vorliegenden Erfindung, und

Figur 3 zeigt ein Verfahren bzw. eine Anlage gemäß einer weiteren Ausgestaltung der vorliegenden Erfindung.

Ausgestaltungen der Erfindung

Die nachfolgend beschriebenen Ausgestaltungen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausgestaltungen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausgestaltungen verwendet und Änderungen vorgenommen werden können, ohne vom Umfang der beanspruchten Erfindung abzuweichen.

Unterschiedliche Ausgestaltungen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausgestaltungen der vorliegenden Erfindung beziehen, können auch für Verfahren, Prozesse, Methoden usw. gemäß den Ausgestaltungen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugzeichen angegeben sein.

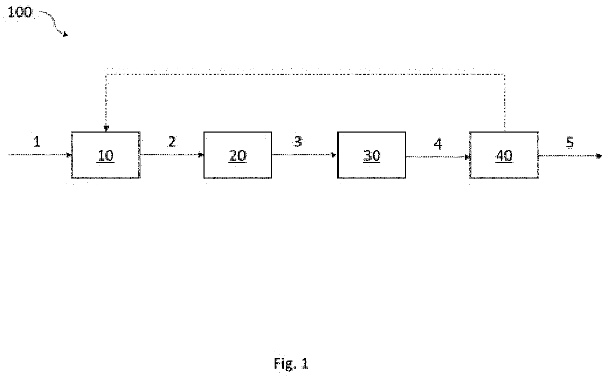

In Figur 1 ist ein Verfahren bzw. eine Anlage gemäß einer Ausgestaltung der vorliegenden Erfindung veranschaulicht. Das Verfahren bzw. die Anlage ist insgesamt mit 100 bezeichnet.

Ein Ammoniakeinsatz 1, beispielsweise aus einem Tank, wird, falls erforderlich, mittels mit einer Pumpe unter Druck gesetzt und einer Vorbehandlung 10 unterzogen. Die Vorbehandlung 10 umfasst dabei insbesondere ein Verdampfen und Überhitzen des Ammoniakeinsatzes 1, wodurch ein aufbereiteter Ammoniakeinsatz 2 erhalten wird. Der verdampfte und überhitzte Ammoniakeinsatz 2 wird anschließend dem ersten Spaltreaktor 20 zur katalytisch unterstützen thermischen Spaltung von Ammoniak zugeführt. Ein dem ersten Spaltreaktor 20 entnommenes erstes Spaltgas 3 enthält in der Regel eine gewisse Menge an nicht umgewandeltem Ammoniak. Dem ersten Spaltreaktor 20 wird Wärme über eine Feuerung zugeführt, um die Ammoniakspaltung bei einer Temperatur von bis zu 900°C durchzuführen. Das erste Spaltgas 3 wird dem ersten Spaltreaktor 20 daher mit einer Temperatur von bis zu 900°C, insbesondere von 600°C bis 900°C oder 700°C bis 900°C, entnommen. Im ersten Spaltreaktor 20 wird bevorzugt ein auf Nickel basierender Katalysator eingesetzt.

Das erste Spaltgas 3 wird anschließend einem zweiten, adiabat betriebenen Spaltreaktor 30 zugeführt, dem keine Wärme von außen zugeführt wird. Da der zweite Spaltreaktor 30 nicht befeuert wird, wird lediglich die Wärme des ersten Spaltgases 3 genutzt, um die endotherme Ammoniakspaltung durchzuführen und ein zweites Spaltgas 4 zu erhalten. Das zweite Spaltgas 4 weist dabei einen niedrigeren Ammoniakgehalt auf als das erste Spaltgas 3. Der zweite Spaltreaktor 30 kann insbesondere mehrere Katalysatorbetten umfassen, die jeweils mit unterschiedlichen Katalysatoren bestückt sind. Da die Temperatur des ersten Spaltgases 3, das dem zweiten Spaltreaktor 30 zugeführt wird, auf seinem Weg durch den zweiten Spaltreaktor 30 abnimmt, werden sinnvollerweise Katalysatoren eingesetzt, die ihre größte Aktivität bei unterschiedlichen Temperarturen besitzen. Beispielsweise kann das eintrittsseitige Katalysatorbett des zweiten Spaltreaktors 30 mit einem auf Nickel basierende Katalysator bestückt sein, während weiter stromabwärts angeordnete Katalysatorbetten einen auf Edelmetall oder Eisen basierenden Katalysator aufweisen.

Nach einer Wärmeintegration 40 liegt das zweite Spaltgas 4 als abgekühltes drittes Spaltgas 5 vor. Nicht umgewandeltes Ammoniak kann anschließend mittels einer Druckwechseladsorption (nicht gezeigt) in einem Restgas zurückgewonnen werden. In der Druckwechseladsorption kann ferner eine Produktfraktion gewonnen werden, die ein Gemisch aus Wasserstoff und Stickstoff, ein sogenanntes Formiergas, oder reiner Wasserstoff ist. Bereits im Ammoniakeinsatz 1 vorliegendes Wasser kann bei der Druckwechseladsorption mit dem Ammoniak aus dem abgekühlten dritten Spaltgas 5 abgetrennt werden und einen Teil des Restgases bilden. Die bei der Wärmeintegration 40 aus dem zweiten Spaltgas 4 zurückgewonnene Wärme wird zum Verdampfen und Überhitzen des Ammoniakeinsatzes 1 in der Vorbehandlung 10 verwendet.

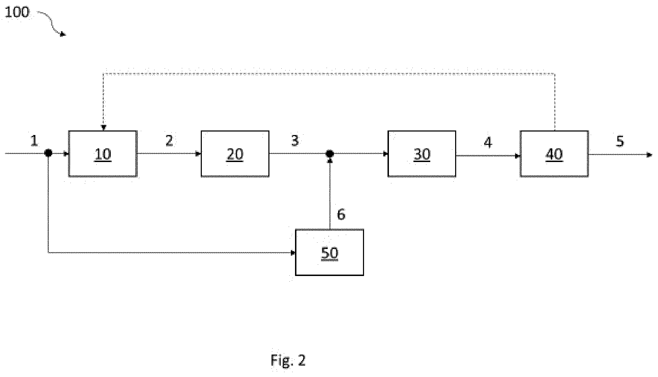

In Figur 2 ist ein Verfahren bzw. eine Anlage gemäß einer weiteren Ausgestaltung der vorliegenden Erfindung veranschaulicht. Das Verfahren bzw. die Anlage ist insgesamt mit 100 bezeichnet. Dabei bezeichnen gleiche Bezugszeichen die gleichen Verfahrensschritte bzw. Anlageneinheiten wie in Figur 1. Auf eine Beschreibung dieser Teile wird im Weiteren verzichtet und auf die Beschreibung der Figur 1 verwiesen.

Im Unterschied zum Verfahren bzw. der Anlage 100 der Figur 1, wird dem ersten Spaltgas 3 ein Ammoniak enthaltender Stoffstrom 6 geregelt zugemischt. Dieser Ammoniak enthaltender Stoffstrom 6, der insbesondere zuvor auf eine vorgegebene Temperatur erwärmt wurde, wird dem ersten Spaltgas 3 flüssig oder gasförmig zugeführt. Hierdurch wird eine Anpassung der Temperatur des durch die Zumischung erhaltenen Stoffstroms an den Aufbau des zweiten Spaltreaktors 30 erreicht. Wird der Ammoniak enthaltender Stoffstrom 6 mit einer hohen Temperatur dem ersten Spaltgas 3 zugemischt, hat auch das dem zweiten Spaltreaktor 30 zugeführte Einsatzgas eine hohe Temperatur, beispielsweise über 800°C. In diesem Fall ist der zweite Spaltreaktor 30 eintrittsseitig mit einem Katalysator ausgeführt, der bei hohen Temperaturen eine hohe Aktivität aufweist, beispielsweise mit einem Katalysator auf Nickelbasis. Weiter stromabwärts angeordnete Katalysatorbetten können mit Katalysatoren bestückt sein, die bei niedrigeren Temperaturen eine hohe Aktivität aufweisen, beispielsweise mit Katalysatoren, die auf Edelmetall und/oder Eisen basieren. Wird hingegen die Temperatur des dem zweiten Spaltreaktor 30 zugeführten Gases durch das Zuführen des Ammoniak enthaltenden Stoffstroms 6 weiter abgesenkt, beispielsweise unter 600°C, können alle im zweiten Spaltreaktor 30 eingesetzten Katalysatoren auf Edelmetall und/oder Eisen basieren.

Bei dem Ammoniak enthaltenden Stoffstrom 6 handelt es sich um einen Teil des Ammoniakeinsatzes 1, der einer Aufbereitung 50 unterzogen wird, bei der der Ammoniakeinsatz 1 auf die vorgegebene Temperatur erwärmt wird. Alternativ kann der Ammoniak enthaltende Stoffstrom 6 auch aus einer anderen Ammoniakquelle bezogen werden.

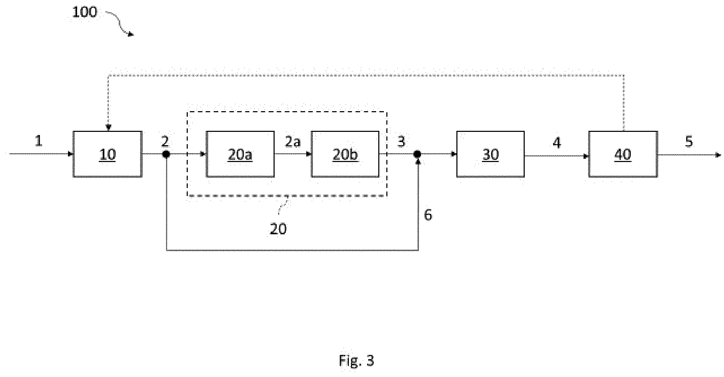

In Figur 3 sind ein Verfahren bzw. eine Anlage gemäß einer weiteren Ausgestaltung der vorliegenden Erfindung veranschaulicht. Das Verfahren bzw. die Anlage ist insgesamt mit 100 bezeichnet. Dabei bezeichnen gleiche Bezugszeichen die gleichen Verfahrensschritte bzw. Anlageneinheiten wie in den Figuren 1 und 2. Auf eine Beschreibung dieser Teile wird im Weiteren verzichtet und auf die Beschreibung der Figuren 1 und 2 verwiesen.

Im Unterschied zu den Verfahren bzw. Anlagen 100 der Figuren 1 und 2, ist der erste Spaltreaktor 20 in Figur 3 als zweistufiger Spaltreaktor mit einem adiabat betriebenen Vorspaltreaktor 20a und einem allotherm beriebenen Hauptspaltreaktor 20b, ausgeführt. Durch den Vorspaltreaktor 20a wird ein Teil des im aufbereiteten Ammoniakeinsatz 2 enthaltenen Ammoniaks zu Wasserstoff und Stickstoff umgesetzt. Anschließend wird der teilweise umgesetzte Ammoniakeinsatz 2a dem Hauptspaltreaktor 20b zugeführt, wo der Ammoniakeinsatz 2a unter Wärmezufuhr weiter umgesetzt wird.

Das entstandene erste Spaltgas 3 wird anschließend mit einem Ammoniak enthaltenden Stoffstrom 6 gemischt. Im Unterschied zum Verfahren der Figur 2, ist der Ammoniak enthaltenden Stoffstrom 6 ein Teil des aufbereiteten Ammoniakeinsatzes 2, von dem ein weiterer Teil dem ersten Spaltreaktor 20 zugeführt wird.

Das zweite Spaltgas 4 wird anschließend, wie auch in den beiden zuvor dargestellten Ausführungsformen, einer Wärmeintegration 40 zugeführt, durch die ein abgekühltes drittes Spaltgas 5 erzeugt wird. Die gewonnen Wärme kann insbesondere in der Vorbehandlung 10 oder zur Erwärmung des für die Bereitstellung der Wärme im Hauptspaltreaktor 20b verfeuerten Brenngases und/oder in der dort eingesetzten Verbrennungsluft verwendet werden.

## Patentansprüche

1.    Verfahren (100) zur thermischen Spaltung von Ammoniak, wobei zumindest ein Teil eines zur Verfügung gestellten Ammoniakeinsatzes (1, 2) in einem endotherm betriebenen ersten Spaltreaktor (20) mit katalytischer Unterstützung unter Erhalt eines Ammoniak sowie Wasserstoff und Stickstoff enthaltenden ersten Spaltgases (3) umgesetzt wird, **dadurch gekennzeichnet, dass** zumindest ein Teil des ersten Spaltgases (3) einem zweiten Spaltreaktor (30) zugeführt wird, um Ammoniak mit katalytischer Unterstützung thermisch zu spalten und ein Ammoniak sowie Wasserstoff und Stickstoff enthaltendes zweites Spaltgas (4) zu erhalten.

2.    Verfahren (100) nach Anspruch 1, wobei der zweite Spaltreaktor (30) adiabat betrieben wird.

3.    Verfahren (100) nach Anspruch 1 oder 2, wobei das erste Spaltgas (3), bevor es dem zweiten Spaltreaktor (30) zugeführt wird, mit einem Ammoniak enthaltenden Stoffstrom (6) gemischt wird.

**4.** Verfahren (100) nach Anspruch 3, wobei der Ammoniak enthaltende Stoffstrom (6) flüssig oder gasförmig dem ersten Spaltgas (3) zugeführt wird.

**5.** Verfahren (100) nach dem Anspruch 3 oder 4, wobei ein Teil des Ammoniakeinsatzes (1) einer Aufbereitung (50) unterzogen wird, um den Ammoniak enthaltenden Stoffstrom (6) zu erhalten.

**6.** Verfahren (100) nach einem der vorhergehenden Ansprüche, wobei der Ammoniakeinsatz (1) unter Erhalt eines vorbehandelten Ammoniakeinsatzes (2) einer Vorbehandlung (10) unterworfen und dabei verdampft und/oder überhitzt wird.

**7.** Verfahren (100) nach Anspruch 6, wobei als Ammoniak enthaltender Stoffstrom (6) ein Teil des vorbehandelten Ammoniakeinsatzes (2) verwendet wird.

**8.** Verfahren (100) nach einem der vorhergehenden Ansprüche, wobei ein erster Spaltreaktor (1) mit einem adiabat betriebenen Vorspaltreaktor (20a) und einem endotherm betriebenen Hauptspaltreaktor (20b) eingesetzt wird.

**9.** Verfahren (100) nach einem der vorhergehenden Ansprüche, wobei die Ammoniakspaltung im ersten Spaltreaktor (20) mit Unterstützung eines auf Nickel basierenden Katalysator durchgeführt wird.

**10.** Verfahren (100) nach einem der vorhergehenden Ansprüche, wobei die Ammoniakspaltung im zweite Spaltreaktor (30) mit Unterstützung eines auf Nickel oder Edelmetall oder Eisen basierenden Katalysator durchgeführt wird.

**11.** Verfahren (100) nach einem der vorhergehenden Ansprüche, wobei das erste Spaltgas im zweiten Spaltreaktor (30) über mehrere seriell angeordnete Katalysatorbetten geführt wird, die jeweils unterschiedliche Katalysatoren aufweisen.

**12.** Verfahren (100) nach einem der vorhergehenden Ansprüche, wobei das zweite Spaltgas (4) einer Wärmeintegration (40) unterzogen wird, bei der Wärme unter Erhalt eines abgekühlten dritten Spaltgases (5) übertragen wird.

**13.** Verfahren (100) nach dem vorhergehenden Anspruch, wobei ein Teil des abgekühlten dritten Spaltgases (5) zur Bereitstellung von Wärme für den ersten Spaltreaktor (20) verfeuert wird.

**14.** Anlage (100) zur thermischen Spaltung von Ammoniak, mit einem endotherm betreibbaren ersten Spaltreaktor (20), mit dem zumindest ein Teil eines zur Verfügung gestellten Ammoniakeinsatzes (1, 2) mit katalytischer Unterstützung unter Erhalt eines Ammoniak sowie Wasserstoff und Stickstoff enthaltenden ersten Spaltgases (3) umsetzbar ist, **dadurch gekennzeichnet, dass** sie einen zweiten Spaltreaktor (30) aufweist, dem zumindest ein Teil des ersten Spaltgases (3) zugeführt werden kann, um Ammoniak mit katalytischer Unterstützung thermisch zu spalten und ein Ammoniak sowie Wasserstoff und Stickstoff enthaltendes zweites Spaltgases (4) zu erhalten.

**15.** Anlage (100) nach Anspruch 14, wobei die Anlage (100) dazu eingerichtet ist, ein Verfahren nach einem der Ansprüche 1 bis 13 durchzuführen.

Fig. 1

Fig. 2

Fig. 3

Europäisches
Patentamt

European
Patent Office

Office européen
des brevets

## EUROPÄISCHER RECHERCHENBERICHT

Nummer der Anmeldung

EP 23 02 0541

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 112 540 A1 (LINDE GMBH [DE]) 4. Januar 2023 (2023-01-04) | 1,2,6, 8-10, 12-15 | INV. C01B3/04 |
| A | * Absätze [0036] - [0039]; Abbildung 2 * ----- | 3-5,7,11 | |
| X | US 2020/398240 A1 (JIANG LILONG [CN] ET AL) 24. Dezember 2020 (2020-12-24) | 1,2,6, 8-10,12, 14,15 | |
| A | * Absätze [0034] - [0044]; Abbildungen 1,2 * ----- | 3-5,7, 11,13 | |
| X | WO 2022/189560 A1 (TOPSOE AS [DK]) 15. September 2022 (2022-09-15) | 1,6, 8-10,12, 14,15 | |
| A | * Seite 23, Zeilen 24-26; Anspruch 4; Abbildung 1 * * Seite 25, Zeile 27 - Seite 27, Zeile 18 * ----- | 2-5,7, 11,13 | |

RECHERCHIERTE SACHGEBIETE (IPC)

C01B

Der vorliegende Recherchenbericht wurde für alle Patentansprüche erstellt

| Recherchenort | Abschlußdatum der Recherche | Prüfer |
|---|---|---|
| München | 21. Mai 2024 | Werner, Håkan |

EPO FORM 1503 03.82 (P04C03)

**EP 4 566 987 A1**

**ANHANG ZUM EUROPÄISCHEN RECHERCHENBERICHT
ÜBER DIE EUROPÄISCHE PATENTANMELDUNG NR.**

EP 23 02 0541

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2024

| Im Recherchenbericht angeführtes Patentdokument | Datum der Veröffentlichung | Mitglied(er) der Patentfamilie | Datum der Veröffentlichung |
|---|---|---|---|
| EP 4112540 A1 | 04-01-2023 | EP 4112540 A1 | 04-01-2023 |
| | | EP 4363372 A1 | 08-05-2024 |
| | | KR 20240028346 A | 05-03-2024 |
| | | WO 2023274573 A1 | 05-01-2023 |
| US 2020398240 A1 | 24-12-2020 | CN 110203882 A | 06-09-2019 |
| | | JP 6977082 B2 | 08-12-2021 |
| | | JP 2021001105 A | 07-01-2021 |
| | | US 2020398240 A1 | 24-12-2020 |
| WO 2022189560 A1 | 15-09-2022 | AR 125527 A1 | 26-07-2023 |
| | | EP 4304980 A1 | 17-01-2024 |
| | | JP 2024510733 A | 11-03-2024 |
| | | KR 20230154201 A | 07-11-2023 |
| | | WO 2022189560 A1 | 15-09-2022 |

EPO FORM P0461

Für nähere Einzelheiten zu diesem Anhang : siehe Amtsblatt des Europäischen Patentamts, Nr.12/82